# EUROPEAN PATENT APPLICATION

(11) **EP 4 772 734 A1**
(43) Date of publication of application: **08.07.2026**
(21) Application number: 26150567.1
(22) Date of filing: 07.01.2026
(51) Int. Cl.: F02K 1/72

(54) **BLOCKER DOOR ASSEMBLY FOR AN AIRCRAFT PROPULSION SYSTEM THRUST REVERSER**

(30) Priority: 06.01.2025 US 202563742227 P
(71) Applicant: Rohr, Inc., Chula Vista, CA 91910-2098 (US)
(72) Inventor: BARLAM, Theodore P., Poway, CA, 92064 (US)
(74) Representative: Dehns

(57) **Abstract**

A thrust reverser includes an outer fixed structure, an inner fixed structure, a translating sleeve (54), and a blocker door assembly (62). The outer fixed structure (56) and the inner fixed structure (58) extend circumferentially about an axis forming a thrust reverser duct (64). The translating sleeve further forms the thrust reverser duct. The blocker door assembly includes a blocker door (66), a drag link (68), and a clevis fitting (70). The blocker door is pivotably mounted to the translating sleeve. The drag link is pivotably mounted to the blocker door. The clevis fitting includes an articulating fitting member (78), a fixed fitting member (80), and a fixed plate (82). The articulating fitting member is pivotably mounted to the drag link about a first tangentially-extending rotational axis. The articulating fitting member is pivotably mounted to the fixed fitting member about a second axially-extending rotational axis. The fixed fitting member and the fixed plate are mounted to the inner fixed structure.

## Description

### BACKGROUND

### 1. Technical Field

This invention relates generally to a thrust reverser for an aircraft propulsion system and, more particularly, to a blocker door of the thrust reverser.

### 2. Background Information

Aircraft propulsion systems may include thrust reversers configured for redirecting air flow in an at least partially forward direction to generate reverse thrust for the propulsion system. Some thrust reversers include blocker doors configured for selectively changing position to control the direction of the air flow. Various mounting arrangements are known in the art for facilitating movement of these blocker doors. While these known arrangements have various advantages, there is still room in the art for improvement.

### SUMMARY

According to an aspect of the present invention, a thrust reverser for an aircraft propulsion system includes an outer fixed structure, an inner fixed structure, a translating sleeve, and a blocker door assembly The outer fixed structure and the inner fixed structure extend circumferentially about an axis. The outer fixed structure and the inner fixed structure form a thrust reverser duct. The translating sleeve further forms the thrust reverser duct. The translating sleeve is axially translatable relative to the outer fixed structure and the inner fixed structure. The blocker door assembly includes a blocker door, a drag link, and a clevis fitting. The blocker door is pivotably mounted to the translating sleeve. The drag link extends between and to an outer drag link end and an inner drag link end. The drag link is pivotably mounted to the blocker door at the outer drag link end. The clevis fitting includes an articulating fitting member, a fixed fitting member, and a fixed plate. The articulating fitting member is pivotably mounted to the drag link at the inner drag link end about a first tangentially-extending rotational axis. The articulating fitting member is pivotably mounted to the fixed fitting member about a second axially-extending rotational axis. The fixed fitting member and the fixed plate are mounted to the inner fixed structure.

In any of the aspects or embodiments described above or herein, the articulating fitting member may include an articulating member body having an outer end and an inner end, and the articulating member body may form a first pin aperture at the outer end and a second pin aperture at the inner end.

In any of the aspects or embodiments described above or herein, the first pin aperture may extend laterally through the articulating member body along the first tangentially-extending rotational axis.

In any of the aspects or embodiments described above or herein, the second pin aperture may extend through the articulating member body along the second axially-extending rotational axis.

In any of the aspects or embodiments described above or herein, the fixed fitting member may include a fixed member body having a plate portion, a first arm portion, and a second arm portion extending from the plate portion.

In any of the aspects or embodiments described above or herein, the first arm portion and the second arm portion may form a second pin aperture extending therethrough along the second axially-extending rotational axis.

In any of the aspects or embodiments described above or herein, the thrust reverser may further include a pin extending through the articulating fitting member and the fixed fitting member, and the pin may extend along the second axially-extending rotational axis.

In any of the aspects or embodiments described above or herein, the fixed plate may form an aperture extending therethrough, and the articulating fitting member may extend through the aperture.

In any of the aspects or embodiments described above or herein, the fixed plate may form lateral gaps between the fixed plate and the articulating fitting member.

In any of the aspects or embodiments described above or herein, the lateral gaps may limit rotation of the articulating fitting member relative to the fixed plate.

In any of the aspects or embodiments described above or herein, the fixed plate may be disposed radially outward of the fixed fitting member.

In any of the aspects or embodiments described above or herein, the fixed plate may be mounted to the fixed fitting member by a plurality of mechanical fasteners extending radially therebetween.

In any of the aspects or embodiments described above or herein, the inner fixed structure may include an outer wall and an inner wall, and the fixed plate and the fixed fitting member may be disposed on opposite sides of the outer wall and the inner wall.

In any of the aspects or embodiments described above or herein, the thrust reverser may further include a resilient aerodynamic seal disposed between the articulating fitting member and the fixed plate.

In any of the aspects or embodiments described above or herein, the aerodynamic seal may circumscribe the articulating fitting member at an aperture formed by the fixed plate.

In any of the aspects or embodiments described above or herein, the first tangentially-extending rotational axis may be disposed radially outward of the second axially-extending rotational axis.

According to another aspect of the present invention, a thrust reverser for an aircraft propulsion system includes an outer fixed structure, an inner fixed structure, a translating sleeve, and a plurality of blocker door assemblies. The outer fixed structure and the inner fixed structure extend circumferentially about an axis and forming a thrust reverser duct. The translating sleeve forms a portion of the thrust reverser duct and is axially translatable relative to the outer fixed structure and the inner fixed structure. The plurality of blocker door assemblies are arranged circumferentially about the axis. Each blocker door assembly includes a blocker door pivotably mounted to the translating sleeve and a drag link extending between and to an outer drag link end and an inner drag link end. The inner drag link end is coupled to the inner fixed structure by a clevis fitting including an articulating fitting member and a fixed fitting member. The articulating fitting member is pivotably mounted to the drag link about a first rotational axis extending tangentially relative to the axis. The articulating fitting member is pivotably mounted to the fixed fitting member about a second rotational axis extending axially relative to the axis.

In any of the aspects or embodiments described above or herein, the clevis fitting may further include a fixed plate mounted to the inner fixed structure and disposed radially outward of the fixed fitting member, and the articulating fitting member may extend through an aperture formed in the fixed plate.

According to another aspect of the present invention, a thrust reverser for an aircraft propulsion system includes an inner fixed structure extending circumferentially about an axis, a translating sleeve axially translatable relative to the inner fixed structure, a blocker door pivotably mounted to the translating sleeve, a drag link extending between and to an outer drag link end pivotably mounted to the blocker door and an inner drag link end, and a clevis fitting mounted to the inner fixed structure and connecting the inner drag link end to the inner fixed structure. The clevis fitting includes an articulating fitting member pivotably mounted to the drag link about a first rotational axis and pivotably mounted to a fixed fitting member about a second rotational axis. The first rotational axis extends in a different direction than the second rotational axis.

In any of the aspects or embodiments described above or herein, the first rotational axis may extend tangentially relative to the axis and the second rotational axis may extend axially relative to the axis.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates a perspective view of a propulsion system for an aircraft, in accordance with one or more embodiments of the present invention.
FIG. 2 illustrates a cutaway, side view of a gas turbine engine of the propulsion system, in accordance with one or more embodiments of the present invention.
FIG. 3 illustrates a cutaway, front view of a thrust reverser of a nacelle of the propulsion system, in accordance with one or more embodiments of the present invention.
FIG. 4 illustrates another cutaway, front view of the thrust reverser, in accordance with one or more embodiments of the present invention.
FIG. 5 illustrates a cutaway, side view of the thrust reverser, in accordance with one or more embodiments of the present invention.
FIG. 6 illustrates another cutaway, side view of the thrust reverser, in accordance with one or more embodiments of the present invention.
FIG. 7 illustrates a perspective view of a clevis fitting of a blocker door assembly of the thrust reverser, in accordance with one or more embodiments of the present invention.
FIG. 8 illustrates another perspective view of the clevis fitting, in accordance with one or more embodiments of the present invention.
FIG. 9 illustrates a side view of the clevis fitting, in accordance with one or more embodiments of the present invention.
FIG. 10 illustrates a cutaway, side view of the clevis fitting, in accordance with one or more embodiments of the present invention.
FIG. 11 illustrates a front view of the clevis fitting, in accordance with one or more embodiments of the present invention.
FIG. 12 illustrates a cutaway, front view of the clevis fitting, in accordance with one or more embodiments of the present invention.

### DETAILED DESCRIPTION

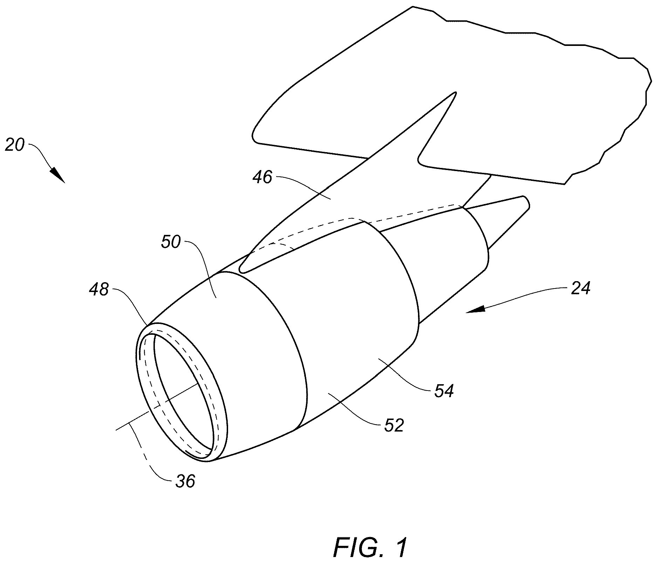

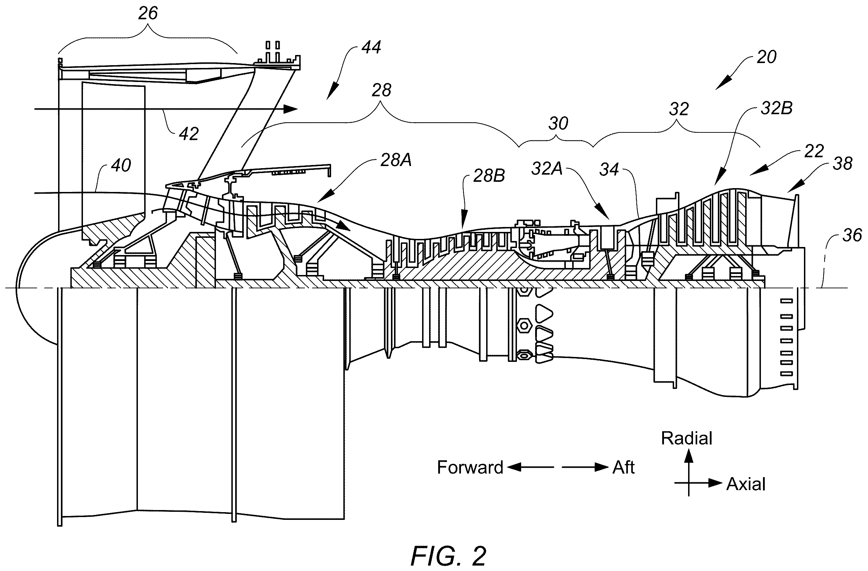

FIGS. 1 and 2 illustrate a propulsion system 20 for an aircraft. FIG. 1 illustrates a perspective view of the propulsion system 20 installed, for example, on an aircraft wing. FIG. 2 illustrates a cutaway, side view of a portion of the propulsion system 20. The propulsion system 20 includes a gas turbine engine 22 and a nacelle 24. This gas turbine engine 22 may be configured as a high-bypass turbofan engine. Alternatively, the gas turbine engine 22 may be configured as any other type of gas turbine engine capable of propelling the aircraft during flight.

The gas turbine engine 22 includes a fan section 26, a compressor section 28, a combustor section 30, a turbine section 32, and an engine static structure 34. The gas turbine engine 22 sections 26, 28, 30, 32 of FIG. 1 are arranged sequentially along an axial centerline 36 (e.g., a rotational axis) of the gas turbine engine 22. The compressor section 28 may include a low-pressure compressor (LPC) 28A and a high-pressure compressor (HPC) 28B. The turbine section 32 may include a high-pressure turbine (HPT) 32A and a low-pressure turbine (LPT) 32B. The present invention, however, is not limited to the particular gas turbine engine 22 configuration of FIG. 2. The gas turbine engine 22 sections 26, 28, 30, 32 form an engine core 38 of the gas turbine engine 22.

The engine static structure 34 may include, for example, one or more engine cases for the gas turbine engine 22. The engine static structure 34 may additionally include cowlings, bearing assemblies, and/or other structural components of the gas turbine engine 22. The one or more engine cases form, house, and/or structurally support components of the gas turbine engine 22 sections 26, 28, 30, 32.

In operation of the gas turbine engine 22, ambient air is directed through the fan section 26 and into a core flow path 40 (e.g., an inner annular flow path) and a bypass flow path 42 (e.g., an outer annular flow path). Air flow along the core flow path 40 is compressed by the low-pressure compressor 28A and the high-pressure compressor 28B, mixed and burned with fuel in the combustor section 30, and then directed through the high-pressure turbine 32A and the low-pressure turbine 32B. The high-pressure turbine 32A and the low-pressure turbine 32B rotationally drive the high-pressure compressor 28B and the low-pressure compressor 28A, respectively, in response to the combustion gas flow through the high-pressure turbine 32A and the low-pressure turbine 32B. Air flow is directed through the propulsion system 20 along the bypass flow path 42 through a bypass duct 44 formed by and between the gas turbine engine 22 and the nacelle 24. This air flow through the bypass duct 44 is exhausted from the propulsion system 20 to facilitate propulsive thrust for the propulsion system 20 and its associated aircraft.

The nacelle 24 is configured to structurally support, house, and provide an aerodynamic cover for the gas turbine engine 22. The nacelle 24 may also mount or facilitate mounting of the propulsion system 20 to an aircraft. For example, the nacelle 24 of FIG. 1 is mounted to a pylon 46 configured to facilitate mounting of the propulsion system 20 to an aircraft. The nacelle 24 includes an air intake 48, a fan cowl 50, and a thrust reverser 52. At least a portion of the thrust reverser 52 may be configured to move (e.g., axially translate) relative to the air intake 48 and the fan cowl 50 to facilitate reverse thrust for the propulsion system 20 by directing air from the bypass duct 44 out of the propulsion system 20 in an at least partially axially forward direction. For example, the thrust reverser 52 includes a translating sleeve 54. The translating sleeve 54 is axially translatable (e.g., relative to the axial centerline 36 between a stowed position and a deployed position, as will be discussed in further detail.

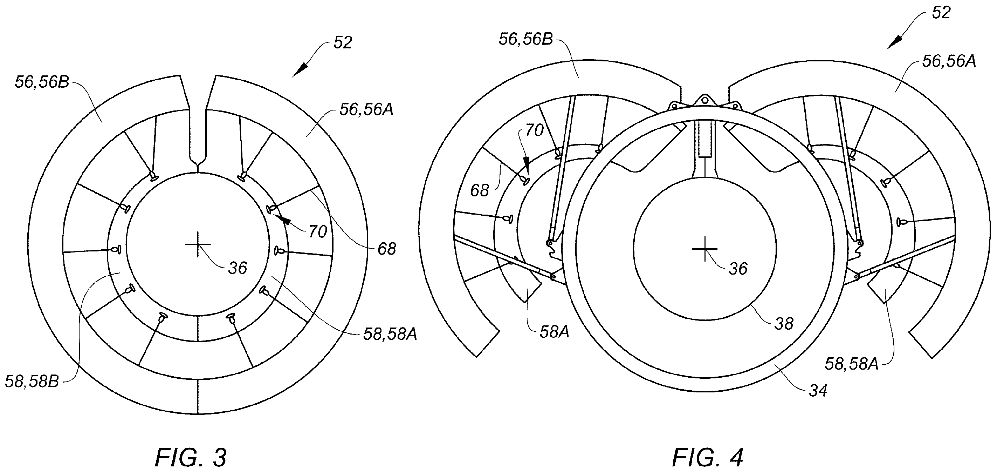

FIGS. 3 and 4 illustrate cutaway, front views of the thrust reverser 52. The thrust reverser 52 further includes an outer fixed structure (OFS) 56 and an inner fixed structure (IFS) 58. The outer fixed structure 56 and the inner fixed structure 58 form an axial portion of the bypass duct 44 through the propulsion system 20 therebetween. The outer fixed structure 56 and the inner fixed structure 58 may support movable components of the thrust reverser 52 which facilitate reverse thrust such as, but not limited to, the translating sleeve 54. Each of the outer fixed structure 56 and the inner fixed structure 58 is positionable in a closed condition and an open condition. FIG. 3 illustrates the outer fixed structure 56 and the inner fixed structure 58 in their respective closed conditions. FIG. 4 illustrates the outer fixed structure 56 and the inner fixed structure 58 in their respective open conditions. In particular, the outer fixed structure 56 and the inner fixed structure 58 each include OFS halves 56A, 56B and IFS halves 58A, 58B, respectively, which are pivotably mounted (e.g., to the pylon 46) to pivot between closed conditions and open conditions of the outer fixed structure 56 and the inner fixed structure 58. The term "fixed," as used herein for the outer fixed structure 56 and the inner fixed structure 58, refers to the fixed axial positioning of the outer fixed structure 56 and the inner fixed structure 58 (e.g., the outer fixed structure 56 and the inner fixed structure 58 are not axially-translating components of the thrust reverser 52).

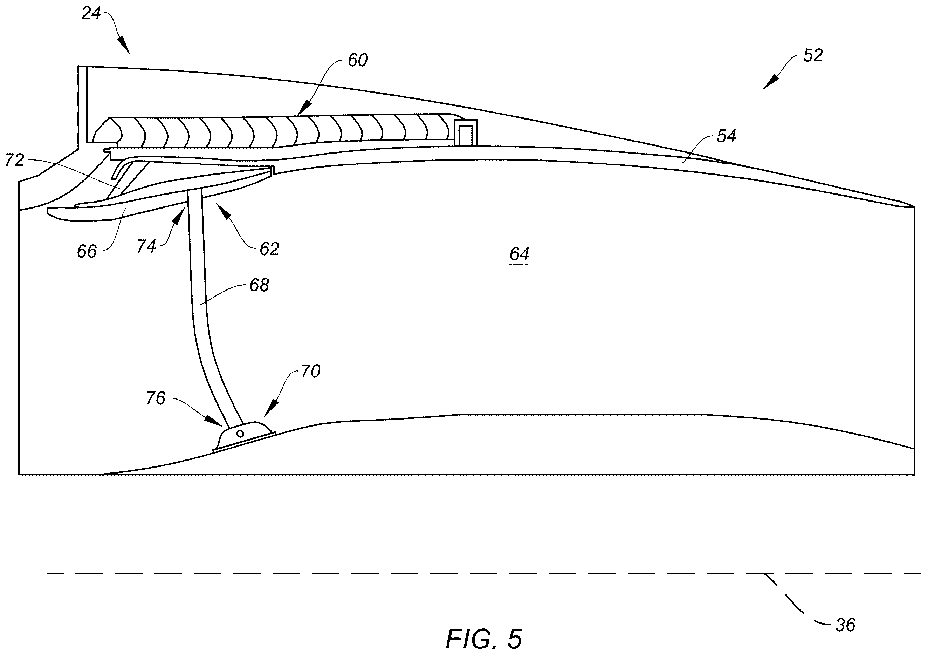

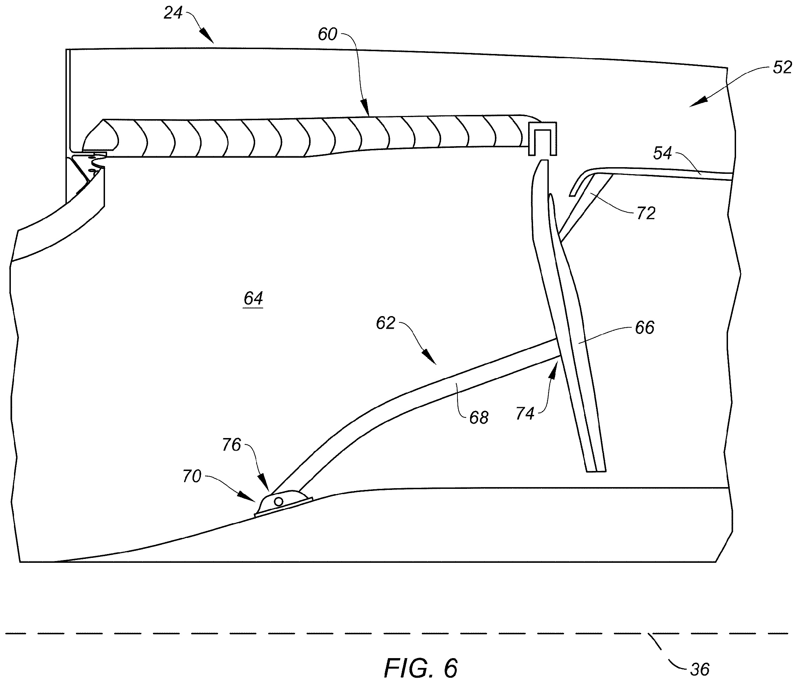

With additional reference to FIGS. 5 and 6, the thrust reverser 52 further includes a plurality of cascade elements 60 and a plurality of blocker door assemblies 62. The thrust reverser 52 surrounds and forms a thrust reverser duct 64 configured to receive and direct air flow (e.g., bypass air flow) from the gas turbine engine 22 to provide thrust for the propulsion system 20.

The cascade elements 60 are disposed between (e.g., radially between) the thrust reverser duct 64 and an exterior of the nacelle 24. The cascade elements 60 may be arranged about the axial centerline 36 as a circumferential array of cascade elements 60. The cascade elements 60 may include a plurality of cascade vanes or other airflow directing structures configured to direct air from the thrust reverser duct 64 out of the propulsion system 20 and in an axially forward direction to provide reverse thrust for the propulsion system 20.

The translating sleeve 54 extends circumferentially about (e.g., completely around) the axial centerline 36. The translating sleeve 54 forms and circumscribes the thrust reverser duct 64. The translating sleeve 54 further circumscribes the blocker door assemblies 62. The translating sleeve 54 may be formed by a single tubular body or a plurality of circumferential sleeve segments assembled together to form the translating sleeve 54. The translating sleeve 54 is configured for translation (e.g., axial movement) between a stowed position (e.g., an axially forward position; see FIG. 5), a deployed position (e.g., an axially aft position; see FIG. 6), and intermediate positions between the stowed position and the deployed position. In the stowed position, the translating sleeve 54 may be disposed between the thrust reverser duct 64 and the cascade elements 60 to direct air flow along the thrust reverser duct 64 and to prevent or impede air flow from the thrust reverser duct 64 through the cascade elements 60. In the deployed position, the translating sleeve 54 is positioned (e.g., aft of the stowed position) to allow air flow from the thrust reverser duct 64 to flow through the cascade elements 60. The thrust reverser 52 may include one or more actuation systems (not shown) for controlling translation of the translating sleeve 54 between the stowed position and the deployed position. The present invention, however, is not limited to any particular actuation system configuration for effecting translation of the translating sleeve 54.

The blocker door assemblies 62 are arranged about the axial centerline 36 as a circumferential array of the blocker door assemblies 62. Each of the blocker door assemblies 62 includes a blocker door 66, a drag link 68, and a clevis fitting 70. The blocker door 66 is pivotably mounted to the translating sleeve 54, for example, by one or more hinges 72. The blocker door 66 is configured for movement with the translating sleeve 54 between the stowed position and the deployed position. For example, as the translating sleeve 54 translates between its respective stowed and deployed positions, the blocker door 66 pivots between its respective stowed and deployed positions. FIG. 5 illustrates the blocker door 66 in its stowed position and FIG. 6 illustrates the blocker door 66 in its deployed position. In the deployed position, the blocker door 66 obstructs the thrust reverser duct 64 and directs air through the cascade elements 60 and out of the propulsion system 20 to generate reverser thrust for the propulsion system 20. The drag link 68 extends (e.g., radially extends) between an outer end 74 of the drag link 68 and an inner end 76 of the drag link 68. The drag link 68 is pivotably mounted to the blocker door 66 at (e.g., on, adjacent, or proximate) the outer end 74. The drag link 68 is pivotably mounted to the inner fixed structure 58 (e.g., one of the IFS halves 58A, 58B) at (e.g., on, adjacent, or proximate) the inner end 76 by the clevis fitting 70.

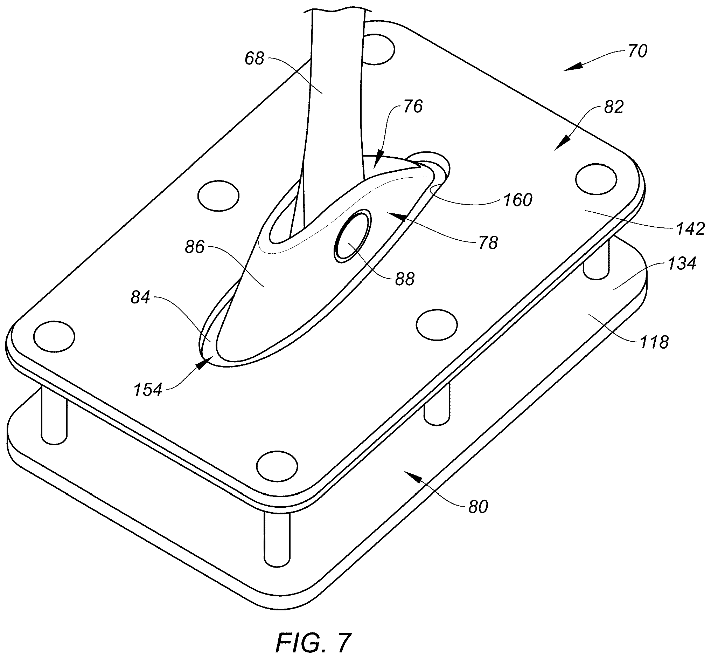

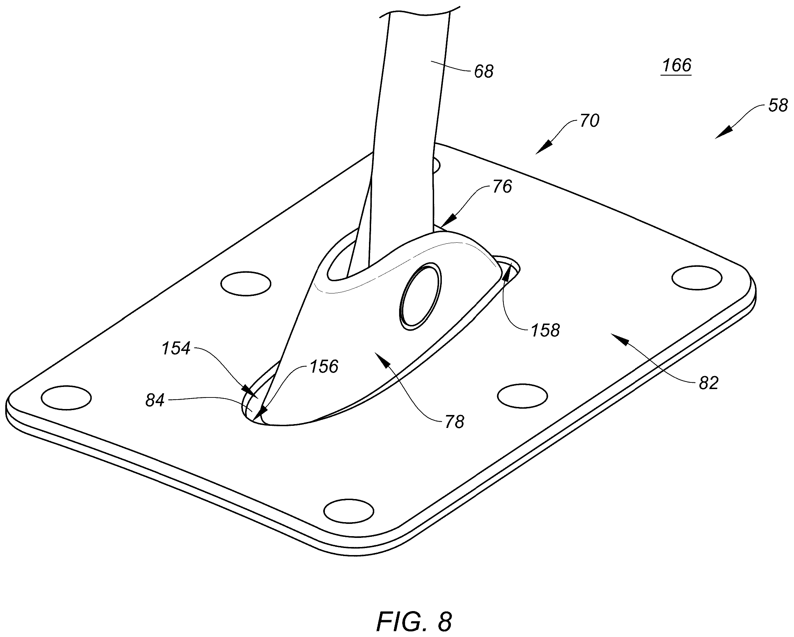

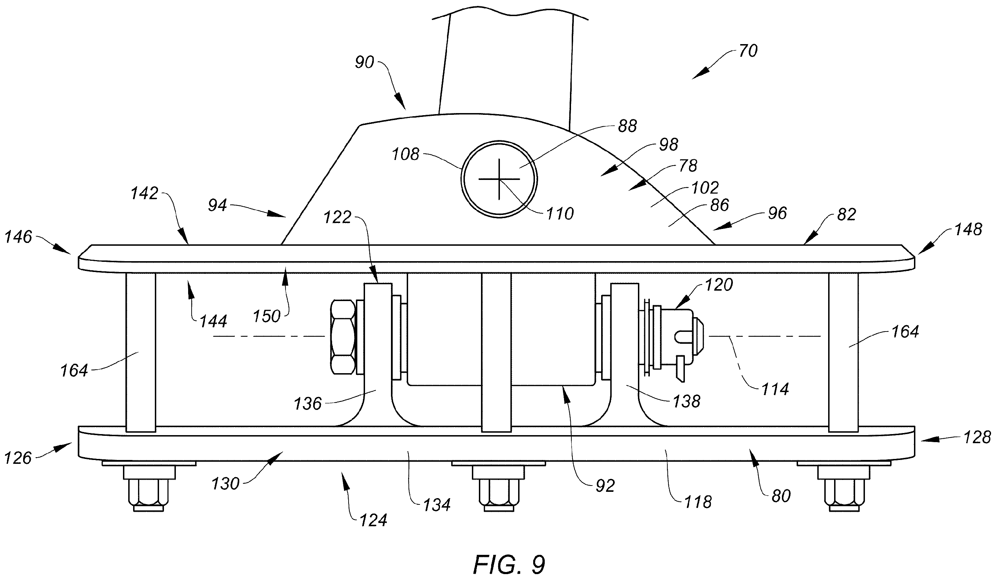

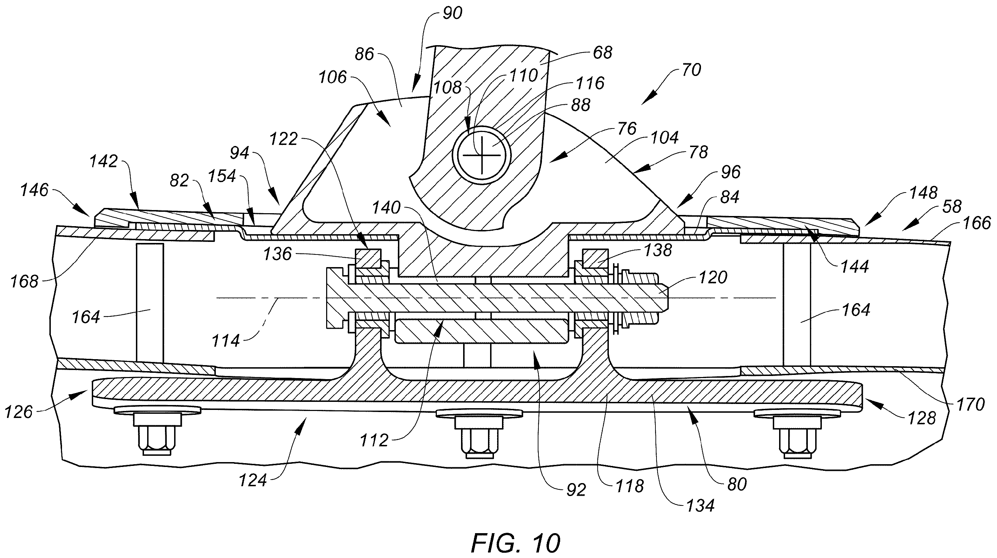

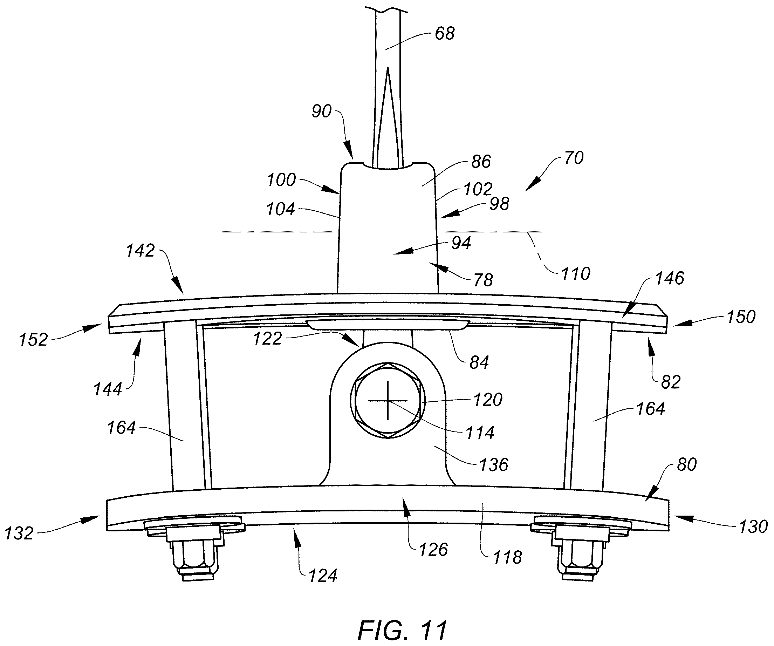

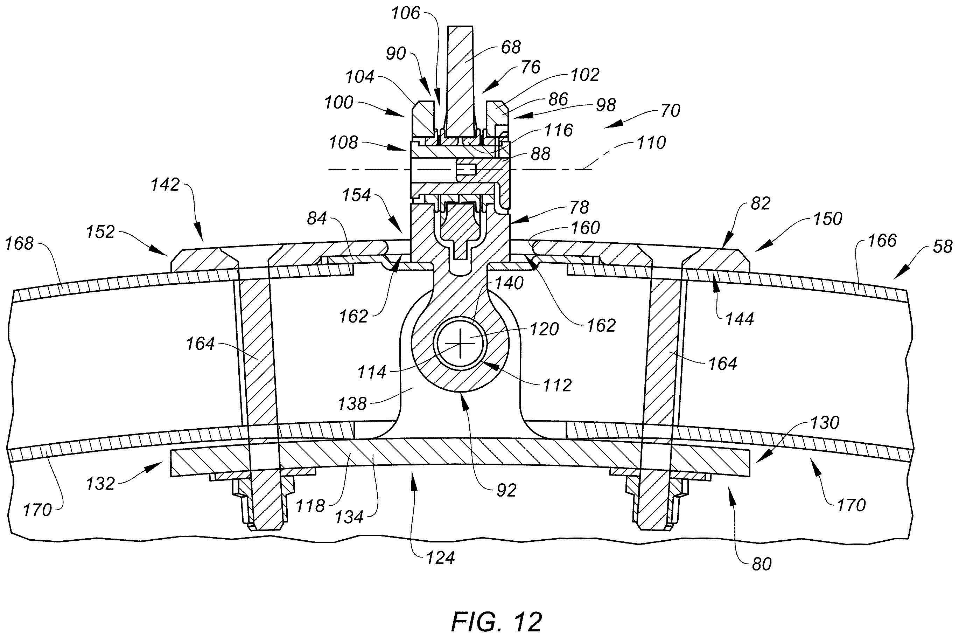

FIGS. 7-12 illustrate the clevis fitting 70 in greater detail. FIG. 7 illustrates a perspective view of the clevis fitting 70. FIG. 8 illustrates a perspective view of the clevis fitting 70 installed on the inner fixed structure 58. FIG. 9 illustrates a side view of the clevis fitting 70. FIG. 10 illustrates a cutaway, side view of the clevis fitting 70 installed on the inner fixed structure 58. FIG. 11 illustrates a front view of the clevis fitting 70. FIG. 12 illustrates a cutaway, front view of the clevis fitting 70 installed on the inner fixed structure 58. The clevis fitting 70 includes an articulating fitting member 78, a fixed fitting member 80, and a fixed plate 82. The clevis fitting 70 may additionally include an aerodynamic seal 84.

The articulating fitting member 78 includes an articulating member body 86 and a first pin 88. The articulating member body 86 extends (e.g., radially extends) between an outer end 90 of the articulating member body 86 and an inner end 92 of the articulating member body 86. The articulating member body 86 extends (e.g., axially extends) between and to an upstream end 94 (e.g., an axially forward end) of the articulating member body 86 and a downstream end 96 (e.g., an axially aft end) of the articulating member body 86. The articulating member body 86 extends laterally (e.g., in a tangential direction relative to the axial centerline 36) between and to a first lateral end 98 of the articulating member body 86 and a second lateral end 100 of the articulating member body 86. The articulating member body 86 includes a first lateral side wall 102 and a second lateral sidewall 104. The first lateral side wall 102 and the second lateral side wall 104 are disposed at (e.g., on, adjacent, or proximate) the outer end 90. The first lateral side wall 102 and the second lateral side wall 104 are laterally spaced from one another to form a center channel 106 of the articulating fitting member 78 laterally therebetween. The center channel 106 is open along the outer end 90. The center channel 106 may be enclosed by the articulating member body 86 along the upstream end 94. For example, the first lateral side wall 102 and the second lateral side wall 104 may intersect at (e.g., on, adjacent, or proximate) the upstream end 94. The first lateral side wall 102 and the second lateral side wall 104 form a first pin aperture 108 of the clevis fitting 70 extending laterally through the articulating member body 86 (e.g., the first lateral side wall 102 and the second lateral side wall 104). The first pin aperture 108 extends through the articulating member body 86 along a first rotational axis 110. The first rotational axis 110 is disposed radially outward of the fixed plate 82 (e.g., and the inner fixed structure 58). The articulating member body 86 forms a second pin aperture 112 of the clevis fitting 70 at (e.g., on, adjacent, or proximate) the inner end 92. The second pin aperture 112 extends through the articulating member body 86 along a second rotational axis 114. The second rotational axis 114 may extend in a direction which is substantially orthogonal to a direction in which the first pin aperture 108 extends. The second rotational axis 114 may be understood as extending axially (e.g., primarily axially) through the articulating member body 86, but may include a radial component as well. The second rotational axis 114 is disposed radially inward of the first rotational axis 110, for example, radially inward of the fixed plate 82.

The first pin 88 is mounted on the articulating member body 86. For example, the first pin 88 is mounted to the first lateral side wall 102 and the second lateral side wall 104 and extends through the first pin aperture 108. The first pin 88 extends on and along the first rotational axis 110. The drag link 68 is pivotably mounted on the first pin 88 (e.g., at the inner end 76) and configured to pivot about the first rotational axis 110 on the first pin 88. The articulating fitting member 78 may include a bearing 116 mounted on the first pin 88 within the center channel 106 (e.g., between the first lateral side wall 102 and the second lateral side wall 104). The drag link 68 may be mounted to the first pin 88 by the bearing 116. The present invention, however, is not limited to this foregoing exemplary configuration of the articulating fitting member 78, and the drag link 68 may alternatively be pivotably mounted directly on the first pin 88.

The fixed fitting member 80 includes a fixed member body 118 and a second pin 120. The fixed member body 118 extends (e.g., radially extends) between an outer end 122 of the fixed member body 118 and an inner end 124 of the fixed member body 118. The fixed member body 118 extends (e.g., axially extends) between and to an upstream end 126 (e.g., an axially forward end) of the fixed member body 118 and a downstream end 128 (e.g., an axially aft end) of the fixed member body 118. The fixed member body 118 extends laterally (e.g., in a tangential direction relative to the axial centerline 36) between and to a first lateral end 130 of the fixed member body 118 and a second lateral end 132 of the fixed member body 118. The fixed member body 118 includes a plate portion 134, a first arm portion 136, and a second arm portion 138. The plate portion 134 extends along the inner end 124 between and to the upstream end 126 and the downstream end 128 and between and to the first lateral end 130 and the second lateral end 132. The plate portion 134 is disposed inward (e.g., radially inward) of the articulating fitting member 78. Each of the first arm portion 136 and the second arm portion 138 extends (e.g., radially extends) from the plate portion 134 to the outer end 122. The first arm portion 136 and the second arm portion 138 further form the second pin aperture 112 extending through the first arm portion 136 and the second arm portion 138 along the second rotational axis 114.

The second pin 120 is mounted on the fixed member body 118. For example, the second pin 120 is mounted to the first arm portion 136 and the second arm portion 138 and extends through the second pin aperture 112. The second pin 120 extends on and along the second rotational axis 114. The articulating member body 86 (e.g., the inner end 92) is pivotably mounted on the second pin 120 between the first arm portion 136 and the second arm portion 138. The articulating member body 86 is configured to pivot about the second rotational axis 114 on the second pin 120. The fixed fitting member 80 may include a bearing 140 mounted on the second pin 120 between the first arm portion 136 and the second arm portion 138. The articulating member body 86 may be mounted to the second pin 120 by the bearing 140. The present invention, however, is not limited to this foregoing exemplary configuration of the articulating fitting member 78 and the fixed fitting member 80, and the articulating member body 86 may alternatively be pivotably mounted directly on the second pin 120.

The fixed plate 82 extends (e.g., radially extends) between an outer end 142 of the fixed plate 82 and an inner end 144 of the fixed plate 82. The fixed plate 82 extends (e.g., axially extends) between and to an upstream end 146 (e.g., an axially forward end) of the fixed plate 82 and a downstream end 148 (e.g., an axially aft end) of the fixed plate 82. The fixed plate 82 extends laterally (e.g., in a tangential direction relative to the axial centerline 36) between and to a first lateral end 150 of the fixed plate 82 and a second lateral end 152 of the fixed plate 82. The fixed plate 82 forms an elongated aperture 154 extending lengthwise between and to a leading end 156 of the aperture 154 and a trailing end 158 of the aperture 154. The aperture 154 extends through the fixed plate 82 from the outer end 142 to the inner end 144. The articulating member body 86 (e.g., the first lateral side wall 102 and the second lateral side wall 104) are disposed within the aperture 154. The fixed plate 82 forms a perimeter 160 of the aperture 154 circumscribing the articulating member body 86 (e.g., the first lateral side wall 102 and the second lateral side wall 104). The fixed plate 82 forms the perimeter 160 with lateral gaps 162 between the articulating member body 86 and the fixed plate 82, for example, between the first lateral side wall 102 and the fixed plate 82 and between the second lateral side wall 104 and the fixed plate 82. The fixed plate 82 is disposed radially outward of the fixed member body 118. The fixed plate 82 is fixedly mounted to the plate portion 134, for example, by a plurality of mechanical fasteners 164 (e.g., bolts) extending radially therebetween.

The clevis fitting 70 may include the aerodynamic seal 84 between the articulating fitting member 78 and the fixed plate 82 at (e.g., on, adjacent, or proximate) the aperture 154. For example, the aerodynamic seal 84 may circumscribe the articulating member body 86 coincident with the aperture 154 to facilitate fluid (e.g., air) sealing between the articulating member body 86 and the fixed plate 82. The aerodynamic seal 84 may include an elastomeric (e.g., rubber) or otherwise resilient sealing material configured to accommodate articulating member body 86 movement (e.g., pivoting about the second rotational axis 114) while preventing or minimizing air flow from the thrust reverser duct 64 through the aperture 154.

The clevis fitting 70 is fixedly mounted on the inner fixed structure 58. For example, the fixed plate 82 is mounted on an outer surface 166 (e.g., an outer radial surface) of the inner fixed structure 58 forming the thrust reverser duct 64. As shown in FIGS. 10 and 12, the inner fixed structure 58 may include an outer wall 168 and an inner wall 170. The outer wall 168 forms the outer surface 166. The inner wall 170 is disposed radially inward of and spaced from the outer wall 168. The inner wall 170 and the outer wall 168 form an aperture 172 within which the clevis fitting 70 is installed in the inner fixed structure 58. The clevis fitting 70 may be mounted on the inner fixed structure 58 such that the inner wall 170 and the outer wall 168 are disposed (e.g., sandwiched) between the fixed plate 82 (e.g., the inner end 144) and the plate portion 134. The mechanical fasteners 164 may extend through the outer wall 168 and the inner wall 170 between the fixed plate 82 and the plate portion 134. The present invention, however, is not limited to this particular mounting configuration of the clevis fitting 70 on the inner fixed structure 58. The second rotational axis 114 and the second pin 120 may be disposed between (e.g., radially between) the outer wall 168 and the inner wall 170.

The clevis fitting 70 facilitates pivoting of the drag link 68 about the first rotational axis 110 and the second rotational axis 114. The drag link 68 (e.g., the inner end 76) pivots within about the first rotational axis 110 as the blocker door 66 pivots (e.g., at the hinges 72) between its stowed and deployed positions (see FIGS. 5 and 6). When OFS halves 56A-B and the IFS halves 58A-B are in their respective open conditions (e.g., for maintenance), the outer fixed structure 56 and the inner fixed structure 58 may experience substantial tangential and/or hoop deflections relative to one another. The clevis fitting 70 facilitates alignment of the drag links 68 during these relative deflections by accommodating pivoting of the drag links 68 (e.g., the inner end 76) with the articulating fitting member 78 about the second rotational axis 114, thereby preventing or reducing the likelihood of bending damage to the drag links 68.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present invention as defined by the claims. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present claimed invention even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. The scope of the invention is defined by the claims.

## Claims

1. A thrust reverser for an aircraft propulsion system, the thrust reverser comprising:
an outer fixed structure (56) and an inner fixed structure (58) extending circumferentially about an axis, the outer fixed structure and the inner fixed structure forming a thrust reverser duct (64);
a translating sleeve (54) further forming the thrust reverser duct, the translating sleeve axially translatable relative to the outer fixed structure and the inner fixed structure; and
a blocker door assembly (62) including a blocker door (66), a drag link (68), and a clevis fitting (70),
the blocker door (66) pivotably mounted to the translating sleeve,
the drag link (68) extending between and to an outer drag link end and an inner drag link end, the drag link pivotably mounted to the blocker door at the outer drag link end, and
the clevis fitting (70) including an articulating fitting member (78), a fixed fitting member (80), and a fixed plate (82), the articulating fitting member pivotably mounted to the drag link (68) at the inner drag link end about a first tangentially-extending rotational axis, the articulating fitting member pivotably mounted to the fixed fitting member (80) about a second axially-extending rotational axis, the fixed fitting member (80) and the fixed plate (82) mounted to the inner fixed structure (58).

2. The thrust reverser of claim 1, wherein the articulating fitting member (78) includes an articulating member body (86) having an outer end and an inner end, the articulating member body forming a first pin aperture (108) at the outer end and a second pin aperture (112) at the inner end.

3. The thrust reverser of claim 2, wherein the first pin aperture (108) extends laterally through the articulating member body along the first tangentially-extending rotational axis, and/or wherein the second pin aperture (112) extends through the articulating member body along the second axially-extending rotational axis.

4. The thrust reverser of claim 1, wherein the fixed fitting member (80) includes a fixed member body (118) having a plate portion (134), a first arm portion (136), and a second arm portion (138) extending from the plate portion, and optionally wherein the first arm portion and the second arm portion form a second pin aperture extending therethrough along the second axially-extending rotational axis.

5. The thrust reverser of claim 1, further comprising a pin extending through the articulating fitting member and the fixed fitting member, the pin extending along the second axially-extending rotational axis.

6. The thrust reverser of claim 1, wherein the fixed plate (82) forms an aperture (154) extending therethrough, the articulating fitting member extending through the aperture.

7. The thrust reverser of claim 6, wherein the fixed plate (82) forms lateral gaps (162) between the fixed plate and the articulating fitting member, and optionally wherein the lateral gaps limit rotation of the articulating fitting member relative to the fixed plate.

8. The thrust reverser of any preceding claim, wherein the fixed plate is disposed radially outward of the fixed fitting member and/or wherein the fixed plate is mounted to the fixed fitting member by a plurality of mechanical fasteners (164) extending radially therebetween.

9. The thrust reverser of any preceding claim, wherein the inner fixed structure (58) includes an outer wall (168) and an inner wall (170), and wherein the fixed plate and the fixed fitting member are disposed on opposite sides of the outer wall and the inner wall.

10. The thrust reverser of any preceding claim, further comprising a resilient aerodynamic seal (84) disposed between the articulating fitting member and the fixed plate, and optionally wherein the aerodynamic seal circumscribes the articulating fitting member at an aperture (154) formed by the fixed plate.

11. The thrust reverser of any preceding claim, wherein the first tangentially-extending rotational axis is disposed radially outward of the second axially-extending rotational axis.

12. A thrust reverser for an aircraft propulsion system, the thrust reverser comprising:
an outer fixed structure (56) and an inner fixed structure (58) extending circumferentially about an axis and forming a thrust reverser duct (64);
a translating sleeve (54) forming a portion of the thrust reverser duct and axially translatable relative to the outer fixed structure and the inner fixed structure; and
a plurality of blocker door assemblies (62) arranged circumferentially about the axis, each blocker door assembly including a blocker door (66) pivotably mounted to the translating sleeve and a drag link (68) extending between and to an outer drag link end and an inner drag link end, the inner drag link end coupled to the inner fixed structure by a clevis fitting (70) including an articulating fitting member (78) and a fixed fitting member (80), the articulating fitting member pivotably mounted to the drag link about a first rotational axis extending tangentially relative to the axis, and the articulating fitting member pivotably mounted to the fixed fitting member about a second rotational axis extending axially relative to the axis.

13. The thrust reverser of claim 12, wherein the clevis fitting further includes a fixed plate (82) mounted to the inner fixed structure (58) and disposed radially outward of the fixed fitting member, the articulating fitting member extending through an aperture formed in the fixed plate.

14. A thrust reverser for an aircraft propulsion system, the thrust reverser comprising:
an inner fixed structure (58) extending circumferentially about an axis;
a translating sleeve (54) axially translatable relative to the inner fixed structure;
a blocker door (66) pivotably mounted to the translating sleeve;
a drag link (68) extending between and to an outer drag link end pivotably mounted to the blocker door and an inner drag link end; and
a clevis fitting (70) mounted to the inner fixed structure and connecting the inner drag link end to the inner fixed structure, the clevis fitting including an articulating fitting member (78) pivotably mounted to the drag link about a first rotational axis and pivotably mounted to a fixed fitting member about a second rotational axis, the first rotational axis extending in a different direction than the second rotational axis.

15. The thrust reverser of claim 14, wherein the first rotational axis extends tangentially relative to the axis and the second rotational axis extends axially relative to the axis.
